# EUROPEAN PATENT APPLICATION

(11) **EP 2 675 202 A2**
(43) Date of publication of application: **18.12.2013**
(21) Application number: 11768458.9
(22) Date of filing: 13.05.2011
(51) Int. Cl.: H04W 8/24

(54) **METHOD, APPARATUS AND MOBILE TERMINAL FOR UPDATING SERVICE CONTENT OF UNSTRUCTURED SUPPLEMENTARY SERVICE DATA**

(71) Applicant: Huawei Device Co., Ltd., Longgang District Shenzhen Guangdong 518129 (CN)
(72) Inventor: LV, Li, Guangdong 518129 (CN)
(74) Representative: Thun, Clemens
(86) International application number: PCT/CN2011/074056
(87) International publication number: WO 2011/127847

(57) **Abstract**

A method, an apparatus, and a mobile terminal for updating Unstructured Supplementary Service Data USSD service content are disclosed by embodiments of the present invention, relating to the field of communication technologies, and invented to increase the flexibility of updating USSD service content of a mobile terminal. The method includes: sending a version information request message to a USSD configuration server; receiving a version information request response message from the USSD configuration server, and obtaining version information of a USSD configuration file from the version information request response message; comparing the version information of the USSD configuration file with version information of its local USSD configuration file; if the version information of the USSD configuration file is later than the version information of its local USSD configuration file, obtaining a USSD configuration file from the USSD configuration server; and updating USSD service content by using the obtained USSD configuration file. Embodiments of the present invention are mainly used in technologies for updating USSD service content.

## Description

### FIELD OF THE INVENTION

The present invention relates to the field of communications technologies, and in particular, to a method, an apparatus, and a mobile terminal for updating Unstructured Supplementary Service Data USSD service content.

### BACKGROUND OF THE INVENTION

An Unstructured Supplementary Service Data (Unstructured Supplementary Service Data, USSD) service provides a service for a terminal, such as balance query, recharging, package subscription, and the like.

Currently, a terminal mainly updates USSD service content in the following manners: an STK (SIM Tool kit, SIM tool kit)-based mode of updating USSD service content, or an application-based mode of updating USSD service content, or the like.

In the STK-based mode of updating USSD service content, the USSD service is updated mainly by using an OTA (Over-the-Air, over-the-air) technology, which means that operators, terminals, and networks must support the STK and the OTA technology. However, in the conventional art, some operators or terminals are incapable of supporting the STK and the OTA technology, so that the STK-based mode of updating the USSD service is difficult to implement. In the application-based mode of updating USSD service content, when there is USSD service content to be updated, the USSD service content may be updated by updating software in a terminal. However, updating software in the terminal means that an operator needs to release new software and that the terminal needs to update its local software. Therefore, this mode makes the USSD service content update very complex and inconvenient.

Therefore, it is necessary to seek a flexible method for updating the USSD service to update USSD service content.

### SUMMARY OF THE INVENTION

Embodiments of the present invention provide a method, an apparatus, and a mobile terminal for updating Unstructured Supplementary Service Data USSD service content to increase the flexibility of updating USSD service content of a mobile terminal.

Embodiments of the present invention adopt the following technical solutions:

A method for updating Unstructured Supplementary Service Data USSD service content includes:
sending a version information request message to a USSD configuration server;
receiving a version information request response message from the USSD configuration server, and obtaining version information of a USSD configuration file from the version information request response message;
comparing the version information of the USSD configuration file with version information of its local USSD configuration file;
if the version information of the USSD configuration file is later than the version information of its local USSD configuration file, obtaining a USSD configuration file from the USSD configuration server; and
updating its local USSD service content by using the obtained USSD configuration file.

A method for updating Unstructured Supplementary Service Data USSD service content includes:
receiving a version information request message from a mobile terminal;
sending a version information request response message to the mobile mobile terminal, where the version information request response message includes version information of a USSD configuration file;
when the mobile terminal determines that the version information of the USSD configuration file is later than the version information of a USSD configuration file of the mobile terminal, sending a USSD configuration file to the mobile terminal, so that the mobile terminal updates USSD service content of the mobile terminal by using the USSD configuration file.

A mobile terminal includes:
a message sending unit, configured to send a version information request message to a USSD configuration server;
an information obtaining unit, configured to receive a version information request response message from the USSD configuration server, and obtain version information of a USSD configuration file from the version information request response message;
an information comparing unit, configured to compare the version information of the USSD configuration file with version information of its local USSD configuration file;
a file obtaining unit, configured to obtain a USSD configuration file from the USSD configuration server when the version information of the USSD configuration file is later than the version information of its local USSD configuration file; and
a file updating unit, configured to update its local USSD service content by using the obtained USSD configuration file.

An apparatus for updating Unstructured Supplementary Service Data USSD service content includes:
a message receiving unit, configured to receive a version information request message from a mobile terminal;
an information sending unit, configured to send a version information request response message to the mobile mobile terminal, where the version information request response message includes version information of a USSD configuration file; and
a file sending unit, configured to send a USSD configuration file to the mobile terminal when the mobile terminal determines that the version information of the USSD configuration file is later than the version information of a USSD configuration file of the mobile terminal, so that the mobile terminal updates USSD service content of the mobile terminal by using the USSD configuration file.

By using the method, apparatus, and mobile terminal for updating Unstructured Supplementary Service Data USSD service content according to embodiments of the present invention, the mobile terminal obtains version information of a configuration file of a USSD configuration server, and compares the version information of the USSD configuration file with version information of a USSD configuration file of the mobile terminal. If the version information of the USSD configuration file is later than the version information of the USSD configuration file of the mobile terminal, the mobile terminal obtains a USSD configuration file from the USSD configuration server, and updates USSD service content of the mobile terminal by using the obtained USSD configuration file. It can be seen that in embodiments of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the method, the apparatus, and the mobile terminal for updating Unstructured Supplementary Service Data USSD service content according to embodiments of the present invention, the flexibility of updating USSD service content of the mobile terminal can be increased.

### BRIEF DESCRIPTION OF THE DRAWINGS

To describe the technical solutions in the embodiments of the present invention or in the conventional art more clearly, the following briefly introduces the accompanying drawings required for describing the embodiments or the conventional art. Apparently, the accompanying drawings in the following description show merely some embodiments of the present invention, and persons of ordinary skill in the art may still derive other drawings from these accompanying drawings without creative efforts.
FIG. 1 is a flowchart of a method for updating USSD service content according to a first embodiment of the present invention;
FIG. 2 is a flowchart of a method for updating USSD service content according to a second embodiment of the present invention;
FIG. 3 is a flowchart of a method for updating USSD service content according to a third embodiment of the present invention;
FIG. 4 is a schematic diagram of a mobile terminal according to a fourth embodiment of the present invention;
FIG. 5 is a structural diagram of a mobile terminal according to the fourth embodiment of the present invention;
FIG. 6 is a schematic diagram of an apparatus for updating USSD service content according to a fifth embodiment of the present invention; and
FIG. 7 is a flowchart of an apparatus for updating USSD service content according to the fifth embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

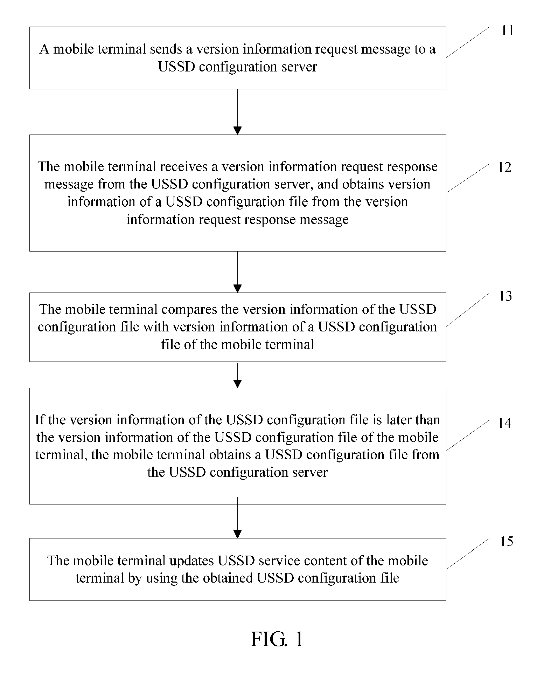

As shown in FIG. 1, a method for updating USSD service content according to a first embodiment of the present invention includes:
Step 11: A mobile terminal sends a version information request message to a USSD configuration server.

In this step, the version information request message is used to indicate that version information of a USSD configuration file is requested from the USSD configuration server. In specific applications, the version information request message may be implemented by using a GET message in the HTTP (Hyper Text Transfer Protocol, Hypertext Transfer Protocol) protocol.

In addition, in the embodiment of the present invention, the mobile terminal can set a time when to obtain version information of a USSD configuration file from the USSD configuration server. For example, the mobile terminal can set to request version information of a USSD configuration file from the USSD configuration server when the mobile terminal is powered on, or the mobile terminal can set to request version information of a USSD configuration file from the USSD configuration server when the mobile terminal determines that USSD service content of the mobile terminal needs to be updated.

Step 12: The mobile terminal receives a version information request response message from the USSD configuration server, and obtains the version information of the USSD configuration file from the version information request response message.

In this step, the version information request response message includes the version information of the USSD configuration file of the USSD configuration server. Therefore, the mobile terminal can obtain the version information of the USSD configuration file from the version information request response message. In specific applications, the version information request response message may be implemented by using a response message in the HTTP protocol.

Step 13: The mobile terminal compares the version information of the USSD configuration file with version information of a USSD configuration file of the mobile terminal.

For example, the version information of the USSD configuration file may be represented by a version number. Therefore, the mobile terminal compares the version number of the USSD configuration file number obtained from the USSD configuration server with the version number of a USSD configuration file of the mobile terminal.

Step 14: If the version information of the USSD configuration file is later than the version information of the USSD configuration file of the mobile terminal, the mobile terminal obtains a USSD configuration file from the USSD configuration server. Otherwise, the process ends.

When the version information of the configuration file obtained by the mobile terminal from the USSD configuration server is later than the version information of the USSD configuration file of the mobile terminal, for example, when the version information represented by the version number of the USSD configuration file obtained from the USSD configuration server is later than the version information represented by the version number of the USSD configuration file of the mobile terminal, the mobile terminal determines that the USSD configuration file of the mobile terminal needs to be updated. Therefore, the mobile terminal obtains a USSD configuration file from the USSD configuration server.

In this step, the mobile terminal may firstly send a configuration file request message to the USSD configuration server, where the configuration file request message is used to indicate that a USSD configuration file is requested from the USSD configuration server. Then, the mobile terminal receives a configuration file request response message from the USSD configuration server, where the configuration file request response message includes the USSD configuration file.

In specific applications, the configuration file request message may also be implemented by using a GET message in the HTTP protocol, and the configuration file request response message may also be implemented by using a response message in the HTTP protocol.

In the embodiment of the present invention, the configuration file may adopt an XML (Extensible Markup Language, extensible markup language) format or a text format or other formats so long as the format of the configuration file can be supported by the mobile terminal. The configuration file includes USSD service display strings and a USSD command. The USSD service display strings are used to indicate names of USSD service content to be updated, and the USSD command is a command corresponding to the names of USSD service content to be updated.

Step 15: The mobile terminal updates USSD service content of the mobile terminal by using the obtained USSD configuration file.

In this step, the mobile terminal parses the USSD configuration file, and updates a USSD user interface of the mobile terminal and the USSD command according to a parsing result of the USSD configuration file.

It can be seen that in the first embodiment of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the method according to the first embodiment of the present invention, the flexibility of updating USSD service content of the mobile terminal can be increased.

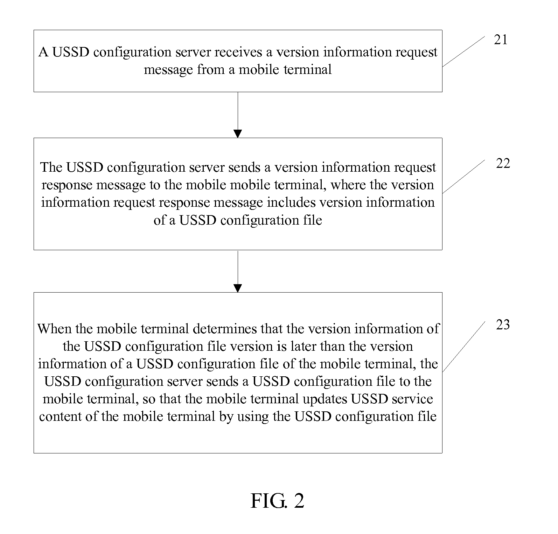

As shown in FIG. 2, a method for updating USSD service content according to a second embodiment of the present invention includes:
Step 21: A USSD configuration server receives a version information request message from a mobile terminal.
Step 22: The USSD configuration server sends a version information request response message to the mobile mobile terminal, where the version information request response message includes version information of a USSD configuration file.

In this step, the USSD configuration server obtains version information of a USSD configuration file of the USSD configuration server according to the version information request message of the mobile terminal, and sends a version information request response message to the mobile terminal, where the version information request response message includes the version information of the USSD configuration file.

In this embodiment, the content of the version information request message and the version information request response message is the same as that described in the first embodiment.

Step 23: When the mobile terminal determines that the version information of the USSD configuration file is later than the version information of a USSD configuration file version of the mobile terminal, the USSD configuration server sends a USSD configuration file to the mobile terminal, so that the mobile terminal updates USSD service content of the mobile terminal by using the USSD configuration file.

In this step, the USSD configuration server receives a configuration file request message from the mobile terminal, where the configuration file request message is used to indicate that the mobile terminal requests a USSD configuration file; and after obtaining its local USSD configuration file, the USSD configuration server sends a configuration file request response message to the mobile terminal, where the configuration file request response message includes the USSD configuration file.

In this embodiment, the content of the configuration file request message and the configuration file request response message is the same as that described in the first embodiment.

It can be seen that in the second embodiment of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the method according to the second embodiment of the present invention, the flexibility of updating USSD service content of the mobile terminal can be increased.

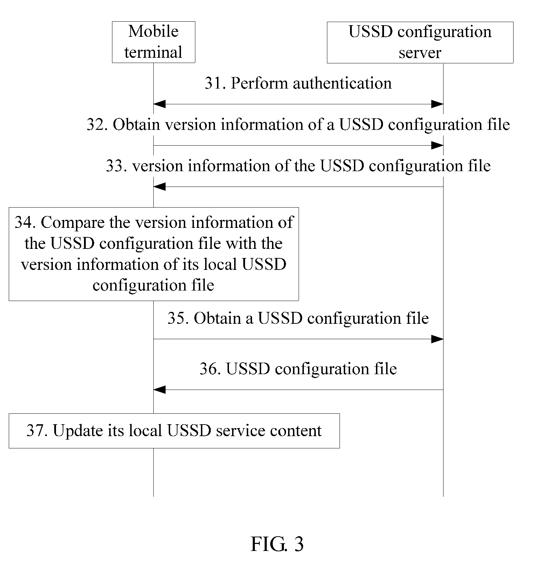

As shown in FIG. 3, a method for updating USSD service content according to a third embodiment of the present invention includes:
Step 31: A mobile terminal performs authentication with a USSD configuration server.

In specific applications, the authentication may be implemented by using such methods as an Https authentication method, a certificate authentication method, and the like. Specific authentication modes are the same as those in the prior art, and are not further described herein.

Step 32: If the authentication succeeds, the mobile terminal obtains version information of a USSD configuration file from the USSD configuration server.

For details about this step, reference may be made to the descriptions of step 11 and step 12 in the first embodiment of the present invention.

Step 33: The USSD configuration server sends the version information of the USSD configuration file to the mobile terminal.

For details about this step, reference may be made to the descriptions of step 21 and step 22 in the second embodiment of the present invention.

Step 34: The mobile terminal compares the version information of the USSD configuration file with version information of a USSD configuration file of the mobile terminal.

For details about this step, reference may be made to the description of step 13 in the first embodiment of the present invention.

Step 35: If the version information of the USSD configuration file is later than the version information of the USSD configuration file of the mobile terminal, the mobile terminal obtains a USSD configuration file from the USSD configuration server.

For details about this step, reference may be made to the description of step 14 in the first embodiment of the present invention.

Step 36: The USSD configuration server sends a USSD configuration file to the mobile terminal, so that the mobile terminal updates USSD service content of the mobile terminal by using the USSD configuration file.

For details about this step, reference may be made to the description of step 23 in the second embodiment of the present invention.

Step 37: The mobile terminal updates USSD service content of the mobile terminal by using the USSD configuration file.

For details about this step, reference may be made to the description of step 15 in the first embodiment of the present invention.

It can be seen that in the third embodiment of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the method according to the third embodiment of the present invention, the flexibility and security of updating USSD service content of the mobile terminal can be increased. In addition, because the mobile terminal is not required to update its local software, operators do not need release new versions of software, so that operating expenditures of the operators are reduced.

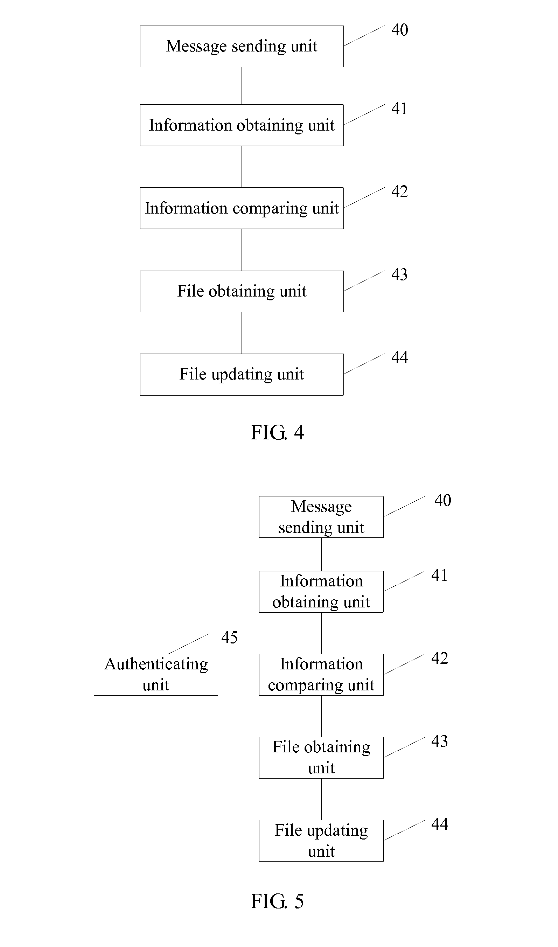

As shown in FIG. 4, a mobile terminal according to a fourth embodiment of the present invention includes: a message sending unit 40, configured to send a version information request message to a USSD configuration server; an information obtaining unit 41, configured to receive a version information request response message from the USSD configuration server, and obtain version information of a USSD configuration file from the version information request response message; an information comparing unit 42, configured to compare the version information of the USSD configuration file with version information of its local USSD configuration file; a file obtaining unit 43, configured to obtain a USSD configuration file from the USSD configuration server when the version information of the USSD configuration file is later than the version information of its local USSD configuration file; and a file updating unit 44, configured to update its local USSD service content by using the obtained USSD configuration file.

The file obtaining unit 42 may include: a first message sending module, configured to send a configuration file request message to the USSD configuration server, where the configuration file request message is used to request a USSD configuration file from the USSD configuration server; and a first message receiving module, configured to receive a configuration file request response message from the USSD configuration server, where the configuration file request response message includes the USSD configuration file. The content of the configuration file request message and the configuration file request response message is the same as that described in the first embodiment.

The file updating unit 44 may include: a parsing module, configured to parse the USSD configuration file; and an updating module, configured to update its local USSD user interface and a USSD command according to a parsing result of the USSD configuration file.

It can be seen that in the fourth embodiment of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the mobile terminal according to the fourth embodiment of the present invention, the flexibility of updating USSD service content of the mobile terminal can be increased.

To enhance security, as shown in FIG. 5, the mobile terminal according to the fourth embodiment of the present invention further includes: an authenticating unit 45, configured to perform authentication with the USSD configuration server. For details about a specific authentication method used by the authenticating unit, reference may be made to the descriptions of the methods provided in the foregoing embodiments.

In specific applications, for details about working principles of the mobile terminal, reference may be made to the descriptions of the methods provided in the foregoing embodiments.

For example, the message sending unit, the information obtaining unit, and the file obtaining unit may be implemented by using an antenna module set by the mobile terminal; the information comparing unit and the file updating unit may be implemented by using a processor, for example, a CPU set in the mobile terminal, and the authenticating unit may be implemented by using an authenticating module set in the mobile terminal.

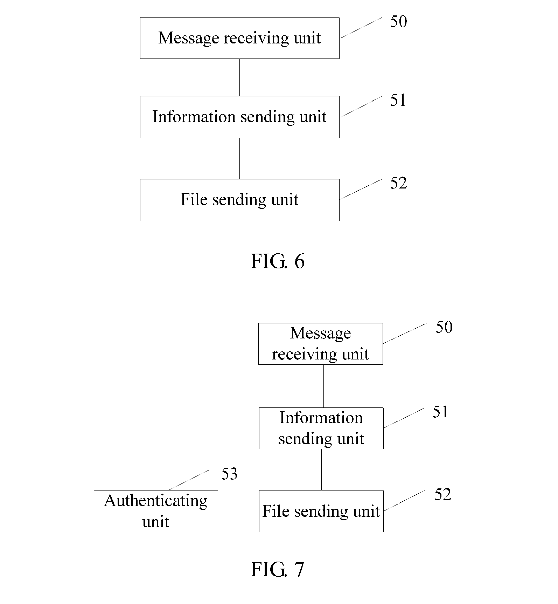

As shown in FIG. 6, an apparatus for updating USSD service content according to a fifth embodiment of the present invention includes: a message receiving unit 50, configured to receive a version information request message from a mobile terminal; an information sending unit 51, configured to send a version information request response message to the mobile terminal, where the version information request response message includes version information of a USSD configuration file; and a file sending unit 52, configured to send the USSD configuration file to the mobile terminal when the mobile terminal determines that the version information of the USSD configuration file is later than the version information of a USSD configuration file of the mobile terminal, so that the mobile terminal updates USSD service content of the mobile terminal by using the USSD configuration file.

The file sending unit 52 may include: a first message receiving module, configured to receive a configuration file request message from the mobile terminal, where the configuration file request message is used to indicate that the mobile terminal requests a USSD configuration file; and a first message sending module, configured to send a configuration file request response message to the mobile terminal, where the configuration file request response message includes the USSD configuration file.

The content of the configuration file request message and the configuration file request response message is the same as that described in the first embodiment.

It can be seen that in the fifth embodiment of the present invention, when the USSD service content of the mobile terminal is updated, the mobile terminal is not required to support an STK and an OTA technology and not required to update the software of the mobile terminal, but updates the USSD service content by using a configuration file obtained from the USSD configuration server. Therefore, by using the apparatus according to the fifth embodiment of the present invention, the flexibility of updating USSD service content of the mobile terminal can be increased.

To enhance security, as shown in FIG. 7, the apparatus according to the fifth embodiment of the present invention further includes: an authenticating unit 53, configured to perform authentication with the mobile terminal. For details about a specific authentication method used by the authenticating unit, reference may be made to the descriptions of the methods provided in the foregoing embodiments.

In specific applications, for details about working principles of the apparatus illustrated in FIG. 6 or FIG. 7, reference may be made to the descriptions of the methods provided in the foregoing embodiments, and the apparatus may be located in the USSD configuration server.

In addition, because the mobile terminal is not required to update its local software, operators do not need release new versions of software, so that operating expenditures of the operators are reduced by using the apparatus according to the fifth embodiment of the present invention.

Person of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a Read-Only Memory (Read-Only Memory, ROM), or a Random Access Memory (Read-Only Memory, RAM).

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for updating Unstructured Supplementary Service Data USSD service content, comprising:
sending a version information request message to a USSD configuration server;
receiving a version information request response message from the USSD configuration server, and obtaining version information of a USSD configuration file from the information request response message;
comparing the version information of the USSD configuration file with version information of its local USSD configuration file;
if the version information of the USSD configuration file is later than the version information of its local USSD configuration file, obtaining a USSD configuration file from the USSD configuration server; and
updating its local USSD service content by using the obtained USSD configuration file.

2. The method according to claim 1, wherein the obtaining a USSD configuration file from the USSD configuration server comprises:
sending a configuration file request message to the USSD configuration server, wherein the configuration file request message is used to indicate that a USSD configuration file is requested from the USSD configuration server; and
receiving a configuration file request response message from the USSD configuration server, wherein the configuration file request response message comprises the USSD configuration file.

3. The method according to claim 1, wherein the updating its local USSD service content by using the obtained USSD configuration file comprises:
parsing the USSD configuration file; and
updating its local USSD user interface and a USSD command according to a parsing result of the USSD configuration file.

4. The method according to claim 1, wherein before the obtaining the version information of the USSD configuration file from the Unstructured Supplementary Service Data USSD configuration server, the method further comprises:
performing authentication with the USSD configuration server.

5. The method according to any one of claims 1 to 4, wherein the USSD configuration file adopts an XML format or a text format.

6. A method for updating Unstructured Supplementary Service Data USSD service content, comprising:
receiving a version information request message from a mobile terminal;
sending a version information request response message to the mobile mobile terminal, wherein the version information request response message comprises version information of a USSD configuration file; and
when the mobile terminal determines that the version information of the USSD configuration file is later than the version information of a USSD configuration file of the mobile terminal, sending the USSD configuration file to the mobile terminal, so that the mobile terminal updates USSD service content of the mobile terminal by using the USSD configuration file.

7. The method according to claim 6, wherein the sending a USSD configuration file to the mobile terminal comprises:
receiving a configuration file request message from the mobile terminal, wherein the configuration file request message is used to indicate that the mobile terminal requests a USSD configuration file; and
sending a configuration file request response message to the mobile terminal, wherein the configuration file request response message comprises the USSD configuration file.

8. The method according to claim 6 or 7, wherein before the version information of the USSD configuration file is sent to the mobile terminal, the method further comprises:
performing authentication with the mobile terminal.

9. A mobile terminal, comprising:
a message sending unit, configured to send a version information request message to a USSD configuration server;
an information obtaining unit, configured to receive a version information request response message from the USSD configuration server, and obtain version information of a USSD configuration file from the information request response message;
an information comparing unit, configured to compare the version information of the USSD configuration file with version information of its local USSD configuration file;
a file obtaining unit, configured to obtain a USSD configuration file from the USSD configuration server when the version information of the USSD configuration file is later than the version information of its local USSD configuration file; and
a file updating unit, configured to update its local USSD service content by using the obtained USSD configuration file.

10. The mobile terminal according to claim 9, wherein the file obtaining unit comprises:
a first message sending module, configured to send a configuration file request message to the USSD configuration server, wherein the configuration file request message is used to indicate that a USSD configuration file is requested from the USSD configuration server; and
a first message receiving module, configured to receive a configuration file request response message from the USSD configuration server, wherein the configuration file request response message comprises the USSD configuration file.

11. The mobile terminal according to claim 9, wherein the file updating unit comprises:
a parsing module, configured to parse the USSD configuration file; and
an updating module, configured to update its local USSD user interface and a USSD command according to a parsing result of the USSD configuration file.

12. The mobile terminal according to any one of claims 9 to 11, further comprising:
an authenticating unit, configured to perform authentication with the USSD configuration server.

13. An apparatus for updating Unstructured Supplementary Service Data USSD service content, comprising:
a message receiving unit, configured to receive a version information request message from a mobile terminal;
an information sending unit, configured to send a version information request response message to the mobile mobile terminal, wherein the version information request response message comprises version information of a USSD configuration file; and
a file sending unit, configured to send the USSD configuration file to the mobile terminal when the mobile terminal determines that the version information of the USSD configuration file is later than the version information of a USSD configuration file of the mobile terminal, so that the mobile terminal updates USSD service content of the mobile terminal by using the USSD configuration file.

14. The apparatus according to claim 13, wherein the file sending unit comprises:
a first message receiving module, configured to receive a configuration file request message from the mobile terminal, wherein the configuration file request message is used to indicate that the mobile terminal requests a USSD configuration file; and
a first message sending module, configured to send a configuration file request response message to the mobile terminal, wherein the configuration file request response message comprises the USSD configuration file.

15. The apparatus according to claim 13 or 14, further comprising:
an authenticating unit, configured to perform authentication with the mobile terminal.
